# EUROPEAN PATENT SPECIFICATION

(11) **EP 1 159 875 B1**
(45) Date of publication and mention of the grant of the patent: **20.04.2005**
(21) Application number: 00111642.5
(22) Date of filing: 31.05.2000
(51) Int. Cl.: A01N 25/34, A01N 53/00, E04B 1/72

(54) **Insecticide-containing foam sheet and process for the preparation thereof**
Insektizidhaltige Schaumplatte und Verfahren zu ihrer Herstellung
Feuille en mousse contenant des insecticides et procédé pour sa préparation

(43) Date of publication of application: 05.12.2001
(73) Proprietor: Dow Global Technologies, Inc., Midland, Michigan 48674 (US)
(72) Inventor: Alcott, Jeff, M., Midland, Michigan 48642 (US); Kubiak, James, J., Midland, Michigan 48642 (US); Gougeon, Brad, Midland, Michigan 48642 (US)
(74) Representative: Sternagel, Fleischer, Godemeyer & Partner Patentanwälte

(56) References cited:
- WO-A-00/44224
- WO-A-94/16560
- JP-A- 10 036 549
- US-A- 5 695 870
- DATABASE WPI Section Ch, Week 198615 Derwent Publications Ltd., London, GB; Class A32, AN 1986-098673 XP002137581 & JP 61 044934 A (OTSUKA KAGAKU YAKUHIN KK), 4 March 1986 (1986-03-04)
- DATABASE CHEMABS [Online] CHEMICAL ABSTRACTS SERVICE, COLUMBUS, OHIO, US; retrieved from STN-INTERNATIONAL, accession no. 111:59127 CA XP002137579 & JP 01 036629 A (FUKUVI CHEMICAL INDUSTRY) 7 February 1989 (1989-02-07)
- DATABASE CHEMABS [Online] CHEMICAL ABSTRACTS SERVICE, COLUMBUS, OHIO, US; retrieved from STN-INTERNATIONAL, accession no. 128:193466 CA XP002137580 & JP 10 036549 A (SHINTO PAINT) 10 February 1998 (1998-02-10)
- DATABASE WPI Section Ch, Week 198950 Derwent Publications Ltd., London, GB; Class A60, AN 1989-367806 XP002137582 & JP 01 275822 A (IG GIJUTSU KENKYUSHO KK) , 6 November 1989 (1989-11-06)

## Description

### Background of the Invention

### Field of the Invention

This invention relates to extruded polymeric foam structures sufficiently insect-repellent to deter insects from chewing through or nesting in the foam and affecting its physical properties.

### Description of Related Art

Rigid and flexible polymeric foam products are used throughout the building construction industry as thermal insulation, protection boards, sill plate and closure gaskets, and expansion/contraction, seismic, isolation joint filler and vibration damping and cushioning materials. These polymeric foams do not provide nutritional value to attract and support insects, but an insect in search of food and shelter may attack them.

It is known to surface-treat construction materials with insecticides to kill insects that may come in contact with or ingest the treated surface material. These insecticide surface treatments typically leach out of the materials over time, or degrade in the presence of air, water, or light, thereby limiting their long-term efficacy. Further, despite the mortality of the initial insect attack, insects may continue the foraging or nesting attack until the insecticide surface treatment has been breached or efficacy lost. Once they have burrowed into the construction materials, insects can find protection from outside weather, nesting space and may be hidden from detection and further insecticide treatments. The resulting infestation by insects may destroy the physical properties of the foam for which it was selected and used.

U. S. Patent No. 5,801,194 discloses a method and device which prevent the intrusion of insects with compostions containing 5 parts by weight or more of insecticide, such as various pyrethrins.

U. S. Patent No.'s 5,194,323 and 5,270,108 discloses discloses an insulated building panel comprising a core of expanded polystyrene bonded to at least two exterior skins of oriented strand board and treated with a sodium borate.

U.S. Patent 5,860,266 discloses a protective sheet comprising a porous film of plastic impregnated with insecticide.

JP-A-10 036 549 discloses foamable polystyrene granules that are fluidized in air, sprayed with a termite repellent, e.g. pyrethrins, and an adhesive. The prefoamed beads that are coated with the repellent are then further expanded to prepare mouldings for thermal insulation.

WO 94/16560 discuses an agent for preventing damage due to termites which has a carrier made of foamable polyurethane and a natural or systhetic pyrethroid.

### Summary of the Invention

It would be advantageous to provide building materials, preferably with insulating properties, which provide insect resistance or repellancy, and which utilize low levels of the biologically effective ingredient.

This invention is an extruded cellular polymer foam sheet having a thickness of at least 0.3 cm, and, based on the weight of the foam solids therein, from 1 ppm to 20,000 ppm of one or more pyrethrum compounds dispersed in the polymer matrix.

In another aspect, this invention is an extruded polymer foam sheet having a thickness of at least 0.3 cm, an average cell size of at least 0.1 mm, and at least one pyrethrum . compound dispersed in the polymer matrix, wherein the total amount of pyrethrum compounds in the sheet, based on the weight of the foam solids therein, is from 1 part per million (ppm) to 20,000 ppm.

In another aspect, this invention is a process for making a foam sheet that comprises extruding a foamable polymer composition having at least one pyrethrum compound dispersed therein, wherein the total amount of pyrethrum compounds in the sheet, based on the weight of the foam solids therein, is from 1 part per million (ppm) to 20,000 ppm, under conditions sufficient to form a foam sheet having a thickness of at least 0.3 cm and an average cell size of at least 0.1 mm.

In another aspect, this invention is a composite composition comprising:
(A) a panel comprising an extruded cellular polymer foam sheet having a thickness of at least 0.3 cm, and, based on the weight of the foam solids therein, from 1 ppm to 20,000 ppm of one or more pyrethrum compounds dispersed in the polymer matrix, and having two or more primary surfaces, and
(B) at least one facer adhered to a primary surface of the panel, the facer comprising a polymer blend containing from about 98% to about 30% by weight of an alkenyl aromatic polymer, and from about 2% to about 70% by weight of an interpolymer containing ethylene, one or more alkenyl aromatic monomers or hindered aliphatic or cycloaliphatic vinylidene monomers, and, optionally, one or more polymerizable olefinic monomers having from 3 to 20 carbon atoms.

It has been discovered that the foam sheet and process of the invention provides a means to obtain foam sheet having a relatively long-lasting insect repellence and/or pesticidal activity throughout the sheet at a relatively low concentration of pyrethrum compound. This invention may also permit the process to make the foam sheet to be run under pressure, temperature, and foaming conditions which may be necessary to produce an extruded foam sheet having a suitable density, R-value retention, uniformity, and surface appearance, while the compounds retain a relatively high and long-lasting efficacy. Preferably, the compounds do not rapidly degrade, leach or elute out of the sheet while used in an insulation application. These and other advantages will be apparent from the description that follows.

### Detailed Description of the Preferred Embodiments

The term "sheet" as used herein means a substantially flat article having a thickness substantially smaller than its width or length, and includes article shapes also commonly referred to planks or boards. Preferably, the thickness of the sheet is at least 1/8-inch (0.3 cm), more preferably at least 0.5 cm, more preferably at least 1/4 inch (0.63 cm), and most preferably at least ½ inch (1.2 cm); but is preferably no greater than 6 inches, more preferably no greater than 5 inches (13 cm), and most preferably no greater than 4 inches (10 cm); its length is preferably at least 24 inches (61 cm), more preferably at least 36 inches (92 cm), most preferably at least 48 inches (122 cm); but is preferably no greater than 120 inches (3.1 m), more preferably no greater than 108 inches (2.8 m), and most preferably no greater than 96 inches (2.4 m). The width of the sheet is preferably at least 16 inches (41 cm), more preferably at least 20 inches (51 cm), most preferably at least 24 inches (61 cm); but is preferably no greater than 60 inches (1.6 m), more preferably no greater than 54 inches (140 cm), and most preferably no greater than 48 inches (120 cm).

The term "pyrethrum" compound as used herein means pyrethrin compounds derived from chrysanthemum plants, or the same or similar compounds derived from other natural sources, and pyrethroid compounds manufactured synthetically. Specific examples of such compounds include, but are not limited to, deltamethrin, permethrin, cypermethrin, bifenthrin, cyfluthrin, cyhalothrin, tefluthrin, resmethrin, allethrin, kadethrin, sanmarton, fenvalerate, esfenvalerate, lambda-cyhalothrin, tralomethrin, fenpropathrin, tetramethrin, as well as mixtures thereof. These compounds may be extracted from plant sources or may be prepared by a suitable chemical process, and are commercially available from such sources as AgrEvo, Zeneca, Bayer, FMC Corporation, and Aldrich Chemical. Preferably, the compound is a pyrcthroid compound selected from deltamethrin, permethrin, bifenthrin, and mixtures thereof. A particularly preferred compound is deltamethrin.

The pyrethrum family of compounds have very effective surface contact insect repelience, which is key to the prevention of insect attack to any foam products which contains them. The thermal and chemical stability and structure of pyrethrum compounds is key to their suitability in plastic manufacturing processes. After manufacture, many pyrethrum compounds remain encapsulated in the foam plastic resin because of their chemical structure and relatively low vapor pressure. As a result, the pyrethrum compounds provide long-term protection against insect borings that could affect the physical properties of the foam. The concentration of pyrethrum compounds in the foam that provides the desired efficacy depends on the specific material used and the targeted insect. In general, the pyrethrum compounds are preferably employed in a cumulative amount, based on the weight of the foam solids, of at least 2 ppm, more preferably at least 5 ppm, more preferably at least 20 ppm, more preferably at least 50 ppm, and most preferably at least 200 ppm; but preferably no greater than 10,000 ppm, more preferably no greater than 5,000 ppm, and more preferably no greater than 2,000 ppm and most preferably no greater than 1,000 ppm, depending on commercial and technical needs. Desirable and preferred ranges include from 50 ppm to 10,000 ppm, from 200 ppm to 5,000 ppm, and from 400 ppm to 900 ppm The term "foam solids" as used herein means the weight of the foam, exclusive of any blowing agent or other gases that are contained in the cells of the foam.

In the foam sheet of the invention, the pyrethrum compounds are dispersed in the polymer matrix of the sheet. This means that when a section of the foam sheet having a thickness of less than twice the average size of the cells (so that the section has few closed cells, even if the sheet from which the section is cut is primarily a closed-cell foam) is contacted with a solvent for the compounds which is a non-solvent for the polymer, the major portion of the compounds in the section do not dissolve in the solvent because they are trapped in the polymer matrix instead of residing at an open cell/polymer interface, or other space in the section of the sheet where the solvent may contact the compound.

The pyrethrum compounds may be included in the foam by direct addition of a neat, formulated or encapsulated material, or by adding a polymer concentrate containing such material. to a polymer foam formulation prior to foaming in a polymeric foam process. The compounds are preferably dispersed in the polymer matrix by thoroughly mixing them with the polymer at a temperature above its glass transition temperature before the polymer is contacted with a gaseous blowing agent under conditions suitable to make the foam sheet. When a mixture of pyrethrum compounds is to be used, they may be mixed together before being added to the polymer melt either neat, formulated or encapsulated, or individually, or a combination thereof.

Pyrethrum compounds have adequate thermal and chemical stability to be used in foam plastic processes. Foam plastics containing these materials have relatively long-term efficacy of insect repellence and mortality. The plastic resin structure of the foam provides long-term environmental protection of the pyrethrum compounds, thereby maintaining their presence and chemical structure. The chemical structure and physical properties of pyrethrum compounds minimize the elution and leaching of these compounds from the foam plastic structure. Functional properties of foam plastic products are not significantly affected by concentrations of pyrethrum compounds that are needed for insect repellence and mortality efficacy.

The term "foamable polymer composition" as used herein means a thermoplastic polymer-containing precursor material for the process to make the foam sheet. Such compositions may comprise polymers that may be combined with a blowing agent prior to extrusion into a suitable shape. A variety of polymers are known to be useful in foam-making processes including polyolefins and alkenyl aromatic polymers. Suitable polyolefins include polyethylene, polypropylene, ethylene-styrene interpolymers, polyethylene terephthalate and polyvinyl chloride. Suitable alkehyl aromatic polymers include polystyrene, syndiotactic polystyrene and copolymers of styrene and other monomers. Suitable polyethylenes include those of high, medium, low, linear low, and ultra low density types.

In one aspect of this invention, the foamable polymer composition preferably comprises an alkenyl aromatic polymer material. The alkenyl aromatic polymer material may be comprised solely of one or more alkenyl aromatic homopolymers, one or more alkenyl aromatic copolymers, a blend of one or more of each of alkenyl aromatic homopolymers and copolymers, or blends of any of the foregoing with a non-alkenyl aromatic polymer. Regardless of composition, the alkenyl aromatic polymer material comprises greater than 50 and preferably greater than 70 weight percent alkenyl aromatic monomeric units. Most preferably, the alkenyl aromatic polymer material is comprised entirely of alkenyl aromatic monomeric units.

Suitable alkenyl aromatic polymers include those derived from alkenyl aromatic compounds such as the solid homopolymer of styrene, a-methylstyrene, o-methylstyrene, m-methylstyrene, p-methylstyrene, ar-ethylstyrene, ar-vinylxylene, archlorostyrene, vinyl benzene, vinyl toluene, and bromostyrene or ar-bromostyrene; the solid copolymers of one or more of such alkenyl aromatic compounds and minor amounts of monoethylenically unsaturated compounds such as C2-6 alkyl acids and esters, ionomeric derivatives, and C4-6 dienes may be copplymerized with alkenyl aromatic compounds. Examples of copolymerizable compounds include acrylic acid, methacrylic acid, ethacrylic acid, maleic acid, itaconic acid, acrylonitrile, citraconic anhydride, itaconic anhydride, maleic anhydride, methyl acrylate, ethyl acrylate, isobutyl acrylate, n-butyl acrylate, methyl methacrylate, vinyl acetate and butadiene. A preferred alkenyl aromatic polymer is polystyrene. Preferred structures comprise substantially (that is, greater than 95 percent) polystyrene. Most preferably, all of the polymer in the foam sheet is polystyrene.

The most preferred extruded foam of the present invention is extruded polystyrene rigid insulation foam. Extruded polystyrene foams are preferred because they provide relatively high compressive strength and modulus, are relatively impermeable to water and water vapor, and are capable of retaining insulating cell gas for long periods of time.

In the preparation of the foam sheet, the blowing agent may be added to the resin in any convenient manner. In an extrusion process, the blowing agent mixture is pumped into heat plastified alkenyl aromatic resin and admixed therewith prior to extrusion through a die to form foam. The blowing agent may be admixed and pumped as a combination stream into the heat plastified resin, or they may be supplied as separate streams. Adequate mixing of the blowing agents into the heat plastified resin is required in order to obtain a product of desirable uniformity. Such mixing may be accomplished by a varicty of means including dynamic mixers such as extruders, so-called static mixers or interfacial surface generators, such as are utilized in U.S. Pat. Nos. 3,751,377 and 3,817,669.

The blowing agent or mixture of blowing agents is preferably utilized in an amount of at least 3 pph (parts by weight per one hundred parts by weight of polymer), more preferably at least 5 pph, most preferably at least 7 pph; but is preferably no greater than 25 pph, more preferably no greater than 20 pph, and most preferably no greater than 18 pph. Examples of suitable blowing agents include hydrocarbon, hydrochlorofluorocarbon, hydrofluorocarbon, halocarbon, carbon dioxide and other suitable physical and chemical blowing agents as needed in the foam processes.

An example of an extrusion process to make foam articles utilizing a mixture of blowing agents is described in US Patent No. 4,636,527, in which a foam sheet defining a plurality of closed noninterconnecting gas-containing primary cells is prepared by a method comprising heat plastifying an alkenyl aromatic polymer, mixing the polymer with a volatile fluid foaming agent under a pressure sufficiently high that foaming is prevented, reducing the temperature of the mixture to a temperature such that when pressure is removed therefrom, a foam of desirable quality is obtained. Another foam-making process is shown and described in U.S. Pat. No. 2,669,751, wherein the volatile fluid foaming agent is injected into a heat-plastified polymer stream within an extruder. From the extruder the heat-plastified gel is passed into a mixer. The heat-plastified gel from the extruder is fed into the inlet end of the mixer and discharged from the outlet end, the flow being in a generally axial direction. From the mixer, the gel passes through coolers such as are described in U.S Pat. No. 2,669,751, and from the coolers to a die which extrudes a generally rectangular board. A generally similar extrusion system and a preferred extrusion system are shown in U.S. Pat. No. 3,966,381.

Other processes for making extruded foams are described in U.S. Pat. Nos. 2,409,910; 2,515,250; 2,669,751; 2,848,428; 2,928,130; 3,121,130; 3,121,911; 3,770,688; 3,815,674; 3,960,792; 3,966,381; 4,085,073; 4,146,563; 4,229,396; 4,302,910; 4,421,866; 4,438,224; 4,454,086 and 4,486,550. The extruded foam formulation typically reaches a maximum temperature of at least 210°C and possibly of at least 240°C, and a pressure of at least 6.21 x 103 kPa (900 psi) and possibly of at least 1.31 x 104 kPa (1900 psi). Thus, typically, the pyrethrum compound is exposed to a temperature of at least 210 °C and a pressure of at least 6.21 x 103 kPa (900 psi) during said extrusion of the foam sheet.

If the foam sheet is comprised of polystyrene, it is preferably a closed-cell foam having an closed cell content of 90 percent to 100 percent according to ASTM D2856-94. Preferably, the closed cell content is at least 95 percent, more preferably at least 97 percent. Processes for making such foam are seen in U.S. Pat. No. 5,434,195, The polystyrene foam sheet preferably has a density of at least 9.6 kg/m3 (kilograms per cubic meter), more preferably at least 17.6 kg/m3, most preferably at least 21.6 kg/m3; but is preferably no greater than 64 kg/m3, more preferably no greater than 40 kg/m3, and most preferably no greater than 32 kg/m3, according to ASTM D-1622-93.

If the foam sheet is comprised of polyethylene, polypropylene, an ethylene-styrene interpolymer or a combination thereof, the foam may be open cell, closed cell, contain both open and closed cells, or may be formed as a plurality of coalesced strands or profiles depending on the needs of the application. Processes for making such foam are seen, for example, in U.S. Pat. Nos. 5,348,795; 5,527,573; 5567,742; and 4,824,720. The polyethylene, polypropylene, an ethylene-styrene interpolymer or a combination thereof-containing foam sheet preferably has a density of at least 8 kg/m3 (kilograms per cubic meter) (0.5 1b/ft3), more preferably at least 16 kg/m3, most preferably at least 24 kg/m3; but preferably no greater than 160 kg/m3, more preferably no greater than 48 kg/m3, according to ASTM D-3575. Desirable combinations of properties are those where the foam sheet is comprised of polyethylene or polypropylene, has a density of at least 16 kg/m3, and a closed cell content of at least 70 percent.

Various additives may be incorporated in the present foam structure such as inorganic fillers, pigments, stabilizers, antioxidants, acid scavengers, ultraviolet absorbers, flame retardants, processing aids, dispersion aids, extrusion aids, and the like. In addition, other additives with insecticidal repellent and/or synergistic properties, such as piperonyl butoxide, may be added to the foamable polymer composition prior to foaming, or may he applied to the exterior portion of the foam sheet in a post-treatment process.

In the preparation of foams in accordance with the present invention, it is often desirable to add a nucleating agent to reduce the primary cell size. Preferred nucleating agents include inorganic substances such as calcium carbonate, calcium silicate, indigo, talc, clay, titanium dioxide, silica, calcium stearate, diatomaceous earth, mixtures of citric acid and sodium bicarbonate, and the like. The amount of nucleating agent employed may range from about 0.01 to about 5 parts by weight per hundred parts by weight of a polymer resin. The preferred range is from 0.1 to about 3 parts by weight. The average cell size is preferably at least 0.01 mm, more preferably at least 0.1 mm, most preferably at least 0.15 mm; but is preferably no greater than 5 mm, more preferably no greater than 3 mm, and most preferably no greater than 1 mm, as may be measured by ASTM D-3576-94.

The foam sheets may be prepared to any suitable size. A common size for commercial foam sheet is a 122 cm by 1524 cm (4 foot by 50 foot) sheet that is sold fan-folded at 2-foot intervals, or rolled up. Common sheet thicknesses range from 0.3-0.95 cm (1/8 - 3/8 inch). The foam sheet of the invention is preferably provided in the form of a relatively thin, rectangular board. Common board sizes are about 2 feet by 8 feet (61 centimeters (cm) by 244 cm) and 4 feet by 8 feet (122 cm by 244 cm) in width and length. If desired, one or both faces of the foam sheet may be grooved to facilitate post treatment with additional quantities of insecticide/termiticide. The sheet may also be grooved to facilitate the drainage of water induced by hydrostatic pressure in the backfill as described, for example, in U.S. Pat. Nos. 4,309,855, 4,704,048, and 5,056,281. Additionally, if desired, one or both faces of the foam sheet may have a film laminated thereto, to increase the strength of the sheet at the interface, as described in U.S. Patent No. 5,695,870.

The foam sheet of the invention preferably has adequate compressive strength, density, R-value retention, and water absorption properties, uniformity, and surface appearance, to make it useful for a variety of applications, including exterior building insulation. Preferred foam sheets have an R value of from 1.2 to 2.4 per cm (3.0-6.0 per inch) based on ASTM C518. The foam sheet contains an amount of pyrethrum compound that is effective to repel or kill at least one type of insect which would otherwise chew or burrow through polymer foam board, especially termites. The insecticidal or insect repellent properties of the hoard may be tested by any suitable method such as, for example, by inducing the insect(s) to crawl across, chew, or burrow through the board by placing a strong-smelling food in a position relative to the insect so that the insect can smell the food and must crawl across, or chew or burrow through the board to reach the food. To determine the insecticidal or insect-repellent properties of the inner portion of the board, it may be desirable to first slice off the outer portions of the board to remove the exterior foam cell layers.

### Illustrative Embodiments

The following examples illustrate the invention, but are not intended to limit it in any way.

### Examples 1-3

Styrene polymer foams are prepared according to the following process with an additive feed of a styrene resin masterbatch containing 2 percent by weight of deltamethrin, permethrin, and bifenthrin. A styrene polymer foam is prepared utilizing a 2 ½-inch diameter extruder that feeds a dynamic mixer, generally of the configuration disclosed in U.S. Pat. No. 2,669,751. The dynamic mixer discharge is passed through multiple heat exchangers of the variety shown in U.S. Pat. No. 3,014,702. The discharge from the heat exchangers is in turn passed through a plurality of interfacial surface generators or static mixers of the type shown in U.S. Pat. No. 3,583,678. The discharge from the static mixers is passed to a slot die. Foam is discharged from the slot die at a rate of 200 pounds per hour.

Acceptable foam products with deltamethrin, permethrin, and bifenthrin levels of approximately 200 ppm and 1000 ppm by weight of resin are obtained by mixing the masterbatch with sufficient additional amounts of polystyrene to obtain a resin feed having the desired concentration of pyrethroid.

### Example 4

Samples of foamed polystyrene sheets prepared as described above with aim values of 20 ppm, 200 ppm and 1000 ppm of deltamethrin were analyzed for deltamethrin. The concentrations of deltamethrin in the three sheets were determined to be within experimental error of the aim values. To determine the homogeneity of the deltamethrin in the boards, core samples were taken through and across two of the sheets. The results showed the concentration of deltamethrin to be equivalent in all areas sampled. The sheets were stored and sampled again one year after manufacture. The results showed that, within experimental error, the concentration of deltamethrin had not changed.

### Example 5

The objective of this experiment was to determine the durability of extruded polystyrene foam insulation containing deltamethrin or disodium octaborate tetrahydrate (DOT) against field population of the eastern subterranean termites, R. flavipes.

Test product Description: The extruded polystyrene foam insulation sheets evaluated in this study were prepared as described above. These polystyrene foam insulation products were treated by dissolving and distributing the compounds, deltamethrin or DOT into the polystyrene plastic during the foam extrusion process. One set of extruded polystyrene foam insulation samples was produced with nominal concentrations of 20, 200 and 1000ppm (wt/wt) deltamethrin while a second set of samples was produced with nominal concentrates of 5000 and 10,000ppm (wt/wt) DOT. An additional extruded polystyrene foam insulation made without deltamethrin or DOT was also provided as an untreated control

Procedure: The polystyrene foam insulation samples (7x14x2cm) and untreated wooden boards (Picea sp.) of the same dimension were secured together using plastic-coated wires to form a feeding block. One set of feeding blocks was comprised of 4 pieces of polystyrene foam boards treated with 0, 20, 200 or 1,000 ppm deltamethrin, and 2 wooden boards. A second set of feeding blocks was made up with 3 pieces of polystyrene foam boards treated with DOT at 0, 5,000 or 10,000ppm (wt/wt), and 3 wooden boards. The position of polystyrene foam boards and wooden boards were assigned at random, and each board was separated using wooden applicators (8 cm by 0.2 cm diameter) to avoid contact from each other. The feeding blocks were placed in underground monitoring stations as described by Su & Scheffrahn (1987). For this study 2 monitoring stations were used in each of 3 field colonies of the eastern subterranean termite, R. flavipes, in southeastern Florida. The station previously contained an all-wood feeding block to allow termite foraging so that termites in the ground readily enter the foam-wood feeding block when it was placed there. Test blocks were placed in the stations for 4-6 weeks. These tests were conducted during the fall of 1998 and the spring of 1999. Following the field exposures in the underground monitoring stations, the foam-wood feeding blocks were retrieved and the numbers of termite entry/exit holes into each extruded polystyrene foam board were counted. The total visible distance of termite tunnels in each extruded polystyrene foam boards was also measured using a hand-held map measurer (Minerva Curvimeter, Forest Supplies, Inc., Jackson, MS). Significant differences in the number of termite entry/exit holes along with the distance of termite tunnels among treatments were separated using an analysis of variance (ANOVA) and LSD-test at a=0.05 (SAS Institute 1987).

Termite foraging activity in the feeding blocks was extensive with just over 1 month of exposure in the underground monitoring stations near known field populations of R. flavipes. The wooden boards bundled within the feeding blocks were significantly consumed by termite foraging activity. There were numerous entry/exit holes and near-surface tunneling by R. flavipes in the untreated polystyrene foam boards. Termite tunneling activities (as measured by the numbers of entry/exit holes and tunneling distances) in polystyrene foam boards treated with 5,000 and 10,000ppm DOT was not significantly different from those recorded for the untreated boards (Table 1). A large number of holes were excavated by termites in polystyrene foam boards treated with 10,000 ppm DOT. It is evident that DOT treatment, even at the highest concentration of 10,000ppm, did not provide significant protection for the foam boards against field populations of R. flavipes.

The mean numbers of entry/exit holes and mean tunneling distances excavated by R. flavipes in polystyrene foam boards treated with 20 ppm deltamethrin were smaller and shorter than in the untreated controls, but the differences were not significant at a=0.05 (Table 1). Termite activity in polystyrene foam boards treated with 200 ppm or 1,000 ppm deltamethrin was significantly lower than those in untreated boards. The activity level declined in proportion to the increase of deltamethrin concentration. Termites excavated a small number of holes near the edges of polystyrene foam boards treated with 200 ppm deltamethrin, but deltamethrin provided near complete protection for polystyrene foam boards at a concentration of 1,000ppm (Table1).

The result of this study showed that DOT, even at the highest concentration of 10,000 ppm, did not provide protection for extruded polystyrene foam boards against field populations of R flavipes. Termite tunneling activity is significantly reduced in polystyrene foam boards treated with deltamethrin at >200 ppm. Under the extreme conditions of this test, termite tunnel activity was reduced to small cosmetic effects in polystyrene foam board treated with 1,000 ppm deltamethrin.

**Table 1.**

| Number of holes and distance of visible tunneling by R. flavipes in polystyrene foam boards treated with disodium octaborate tetrahydrate (DOT) or deltamethrin, after 4-6 weeks exposure to field populations. | | | |
|---|---|---|---|
| Insecticide | Concentration (ppm) | No. holes | Tunneling distance (cm) |
| DOT | 0 | 166.3 + 20.8a | 56.0 + 10.0a |
| | 5,000 | 172.6 + 35.2a | 34.6 + 11.8a |
| | 10,000 | 116.5 + 16.7a | 35.0 +5.6a |
| Deltamethrin | 0 | 226.4 + 57.8a | 59.6 + 14.4a |
| | 20 | 123.8 + 100.1ab | 30.0 + 14.7ab |
| | 200 | 29.0 + 16.9b | 12.5 + 6.3b |
| | 1,000 | 10.8 + 5.6b | 3.0 + 2.4b |

Means followed by the same letter within a column for each insecticide are not significantly different at a=0.05 according to LSD test (SAS Institute 1987).

## Claims

1. An extruded cellular polymer foam sheet having a thickness of at least 0.3 cm, and, based on the weight of the foam solids therein, from 1 part per million (ppm) to 20,000 ppm of one or more pyrethrum compounds dispersed in the polymer matrix.

2. The extruded cellular polymer foam sheet of Claim 1, wherein the total amount of pyrethrum compounds in the sheet, based on the weight of the foam solids therein, is from 50 ppm to 10,000 ppm.

3. The extruded cellular polymer foam sheet of Claim 2, wherein the total amount of pyrethrum compounds in the sheet, based on the weight of the foam solids therein, is from 200 ppm to 5,000 ppm.

4. The extruded cellular polymer foam sheet of Claim 1, wherein the total amount of pyrethrum compounds in the sheet, based on the weight of the foam solids therein, is from 400ppm to 900ppm.

5. The extruded cellular polymer foam sheet of one of Claims 1-4 wherein the sheet has a closed cell content of at least 90 percent.

6. The extruded cellular polymer foam sheet of Claim 5 wherein the sheet has a closed cell content of at least 95 percent.

7. The extruded cellular polymer foam sheet of one of Claims 1-6. wherein the foam sheet has an average cell size of at least 0.1 mm.

8. The extruded cellular polymer foam sheet of one of Claims 1-7, wherein the foam sheet has a thickness of at least 0.5 cm.

9. The extruded cellular polymer foam sheet of Claim 8, wherein the foam sheet has a thickness of at least 1.2 cm.

10. The extruded cellular polymer foam sheet of one of Claims 1-9, wherein the foam sheet is comprised of polystyrene, and has a density of at least 9.6 kg/m3.

11. The extruded cellular polymer foam sheet of one of Claims 1-9, wherein the foam sheet is comprised of polyethylene, polypropylene, an ethylene-styrene interpolymer or a mixture thereof.

12. The extruded cellular polymer foam sheet of Claim 11, wherein the foam sheet is comprised of polyethylene, has a density of at least 16 kg/m3, and a closed cell content of at least 70 percent.

13. The extruded cellular polymer foam sheet of Claim 11, wherein the foam sheet is comprised of polypropylene, has a density of at least 16 kg/m³, and a closed cell content of at least 70 percent.

14. The extruded cellular polymer foam sheet of one of Claims 1-13, wherein the sheet comprises one or more of deltamethrin, permethrin, cypermethrin, bifenthrin, cyfluthrin, cyhalothrin, tefluthrin, resmethrin, allethrin, kadethrin, fenvalerate, esfenvalerate, lambda-cyhalothrin, tralomethrin, fenpropathrin, tetramethrin, sanmarton, and mixtures thereof, dispersed in the polymer matrix.

15. The extruded cellular polymer foam sheet of Claim 14, wherein the sheet comprises one or more of deltamethrin, permethrin, bifenthrin, and mixtures thereof.

16. The extruded cellular polymer foam sheet of one of Claims 1-15, wherein the foam has an R value of 1.2 to 2.4 per cm (3.0 to 6.0 per inch) based on ASTM C518.

17. A process for making a foam sheet that comprises extruding a foamable polymer composition having at least one pyrethrum compound dispersed therein, wherein the total amount of pyrethrum compounds in the sheet, based on the weight of the foam solids therein, is from 1 part per million (ppm) to 20,000 ppm, under conditions sufficient to form a foam sheet having a thickness of at least 0.3 cm and an average cell size of at least 0.1 mm.

18. The process of Claim 17 wherein the pyrethrum compound is deltamethrin, permethrin, bifenthrin, or a mixture thereof.

19. The process of one of Claims 17-18, wherein the pyrethrum compound is exposed to a temperature of at least 210 °C and a pressure of at least 6.21 x 103 kPa (900 psi) during said extrusion of the foam sheet.

20. The process of Claim 19, wherein the pyrethrum compound is exposed to a temperature of at least 240°C during said extrusion of the foam sheet.

21. The process of Claim 19, wherein the pyrethrum compound is exposed to a pressure of at least 1.31 x 10⁴ kPa (1900 psi) during said extrusion of the foam sheet.

22. A composite composition comprising:
(A) a panel comprising an extruded cellular polymer foam sheet of one of Claims 1-16 having two or more primary surfaces, and
(B) at least one facer adhered to a primary surface of the panel, the facer comprising a polymer blend containing from 98% to 30% by weight of an alkenyl aromatic polymer, and from 2% to 70% by weight of an interpolymer containing ethylene, one or more alkenyl aromatic monomers or hindered aliphatic or cycloaliphatic vinylidene monomers, and, optionally, one or more polymerizable olefinic monomers having from 3 to 20 carbon atoms.

## Patentansprüche

1. Extrudierte Platte aus zellulärem Polymerschaum mit einer Dicke von mindestens 0,3 cm und, bezogen auf das Gewicht der Schaumfeststoffe darin, 1 Teil pro Million (ppm) bis 20000 ppm einer oder mehrerer Pyrethrumverbindungen, die in der Polymermatrix verteilt sind.

2. Extrudierte Platte aus zellulärem Polymerschaum nach Anspruch 1, wobei die Gesamtmenge von Pyrethrumverbindungen in der Platte, bezogen auf das Gewicht der Schaumfeststoffe darin, 50 ppm bis 10000 ppm beträgt.

3. Extrudierte Platte aus zellulärem Polymerschaum nach Anspruch 2, wobei die Gesamtmenge von Pyrethrumverbindungen in der Platte, bezogen auf das Gewicht der Schaumfeststoffe darin, 200 ppm bis 5000 ppm beträgt.

4. Extrudierte Platte aus zellulärem Polymerschaum nach Anspruch 1, wobei die Gesamtmenge von Pyrethrumverbindungen in der Platte, bezogen auf das Gewicht der Schaumfeststoffe darin, 400 ppm bis 900 ppm beträgt.

5. Extrudierte Platte aus zellulärem Polymerschaum nach einem der Ansprüche 1-4, wobei die Platte einen Gehalt an geschlossenen Zellen von mindestens 90% hat.

6. Extrudierte Platte aus zellulärem Polymerschaum nach Anspruch 5, wobei die Platte einen Gehalt an geschlossenen Zellen von mindestens 95% hat.

7. Extrudierte Platte aus zellulärem Polymerschaum nach einem der Ansprüche 1-6, wobei die Schaumplatte eine mittlere Zellgröße von mindestens 0,1 mm hat.

8. Extrudierte Platte aus zellulärem Polymerschaum nach einem der Ansprüche 1-7, wobei die Schaumplatte eine Dicke von mindestens 0,5 cm hat.

9. Extrudierte Platte aus zellulärem Polymerschaum nach Anspruch 8, wobei die Schaumplatte eine Dicke von mindestens 1,2 cm hat.

10. Extrudierte Platte aus zellulärem Polymerschaum nach einem der Ansprüche 1-9, wobei die Schaumplatte aus Polystyrol besteht und eine Dichte von mindestens 9,6 kg/m³ hat.

11. Extrudierte Platte aus zellulärem Polymerschaum nach einem der Ansprüche 1-9, wobei die Schaumplatte aus Polyethylen, Polypropylen, einem Ethylen-Styrol-Interpolymer oder einer Mischung daraus besteht.

12. Extrudierte Platte aus zellulärem Polymerschaum nach Anspruch 11, wobei die Schaumplatte aus Polyethylen besteht, eine Dichte von mindestens 16 kg/m³ und einen Gehalt an geschlossenen Zellen von mindestens 70% hat.

13. Extrudierte Platte aus zellulärem Polymerschaum nach Anspruch 11, wobei die Schaumplatte aus Polypropylen besteht, eine Dichte von mindestens 16 kg/m³ und einen Gehalt an geschlossenen Zellen von mindestens 70% hat.

14. Extrudierte Platte aus zellulärem Polymerschaum nach einem der Ansprüche 1-13, wobei die Platte eines oder mehrere von Deltamethrin, Permethrin, Cypermethrin, Bifenthrin, Cyfluthrin, Cyhalothrin, Tefluthrin, Resmethrin, Allethrin, Kadethrin, Fenvalerat, Esfenvalerat, Lambda-Cyhalothrin, Tralomethrin, Fenpropathrin, Tetramethrin, Sanmarton und Mischungen daraus, verteilt in der Polymermatrix, enthält.

15. Extrudierte Platte aus zellulärem Polymerschaum nach Anspruch 14, wobei die Platte eines oder mehrere von Deltamethrin, Permethrin, Bifenthrin und Mischungen daraus enthält.

16. Extrudierte Platte aus zellulärem Polymerschaum nach einem der Ansprüche 1-15, wobei der Schaum einen R-Wert von 1,2-2,4 pro cm (3,0-6,0 pro Inch) auf Basis von ASTM-C518 hat.

17. Verfahren zur Herstellung einer Schaumplatte, das Extrudieren einer aufschäumbaren Polymerzusammensetzung, die mindestens eine Pyrethrumverbindung darin verteilt aufweist, wobei die gesamte Menge von Pyrethrumverbindungen in der Platte, bezogen auf das Gewicht der Schaumfeststoffe darin, 1 Teil pro Million (ppm) bis 20000 ppm beträgt, unter Bedingungen, die ausreichend sind, um eine Schaumplatte mit einer Dicke von mindestens 0,3 cm und einer mittleren Zellgröße von mindestens 0,1 mm zu bilden, umfasst.

18. Verfahren nach Anspruch 17, wobei die Pyrethrumverbindung Deltamethrin, Permethrin, Bifenthrin oder eine Mischung daraus ist.

19. Verfahren nach einem der Ansprüche 17-18, wobei die Pyrethrumverbindung einer Temperatur von mindestens 210° C und einem Druck von mindestens 6,21 x 10³ kPa (900 psi) während dieser Extrusion der Schaumplatte ausgesetzt wird.

20. Verfahren nach Anspruch 19, wobei die Pyrethrumverbindung einer Temperatur von mindestens 240° C während dieser Extrusion der Schaumplatte ausgesetzt wird.

21. Verfahren nach Anspruch 19, wobei die Pyrethrumverbindung einem Druck von mindestens 1,31 x 10⁴ kPa (1900 psi) während dieser Extrusion der Schaumplatte ausgesetzt wird.

22. Verbundzusammensetzung, umfassend:
(A) eine Tafel, die eine extrudierte Platte aus zellulärem Polymerschaum nach einem der Ansprüche 1-16 mit zwei oder mehr Hauptoberflächen aufweist, und
(B) mindestens eine Deckschicht, die an einer Hauptoberfläche der Tafel haftet, wobei die Deckschicht einen Polymerblend, der 98-30 Gew.-% eines aromatischen Alkenylpolymers und 2-70 Gew.-% eines Interpolymers enthält, das Ethylen, ein oder mehrere aromatische Alkenylmonomere oder gehinderte aliphatische oder cycloaliphatische Vinylidenmonomere und optional ein oder mehrere polymerisierbare olefinische Monomere mit 3-20 Kohlenstoffatomen enthält.

## Revendications

1. Feuille de mousse de polymère cellulaire extrudée, épaisse d'au moins 0,3 cm et contenant, par rapport au poids des matériaux solides constituant la mousse, de 1 à 20 000 ppm (parties par million) d'un ou plusieurs composés pyréthroïdes dispersés dans la matrice polymère.

2. Feuille de mousse de polymère cellulaire extrudée, conforme à la revendication 1, dans laquelle les composés pyréthroïdes se trouvent, par rapport au poids des matériaux solides constituant la mousse, en une quantité totale de 50 à 10 000 ppm.

3. Feuille de mousse de polymère cellulaire extrudée, conforme à la revendication 2, dans laquelle les composés pyréthroïdes se trouvent, par rapport au poids des matériaux solides constituant la mousse, en une quantité totale de 200 à 5 000 ppm.

4. Feuille de mousse de polymère cellulaire extrudée, conforme à la revendication 1, dans laquelle les composés pyréthroïdes se trouvent, par rapport au poids des matériaux solides constituant la mousse, en une quantité totale de 400 à 900 ppm.

5. Feuille de mousse de polymère cellulaire extrudée, conforme à l'une des revendications 1 à 4, dans laquelle il y a au moins 90 % de cellules fermées.

6. Feuille de mousse de polymère cellulaire extrudée, conforme à la revendication 5, dans laquelle il y a au moins 95 % de cellules fermées.

7. Feuille de mousse de polymère cellulaire extrudée, conforme à l'une des revendications 1 à 6, dans laquelle la taille moyenne des cellules vaut au moins 0,1 mm.

8. Feuille de mousse de polymère cellulaire extrudée, conforme à l'une des revendications 1 à 6, qui est épaisse d'au moins 0,5 cm.

9. Feuille de mousse de polymère cellulaire extrudée, conforme à la revendication 8, qui est épaisse d'au moins 1,2 cm.

10. Feuille de mousse de polymère cellulaire extrudée, conforme à l'une des revendications 1 à 9, qui est constituée de polystyrène et dont la masse volumique vaut au moins 9,6 kg/m³.

11. Feuille de mousse de polymère cellulaire extrudée, conforme à l'une des revendications 1 à 9, qui est constituée de polyéthylène, de polypropylène, d'un interpolymère d'éthylène et de styrène, ou d'un mélange de tels polymères.

12. Feuille de mousse de polymère cellulaire extrudée, conforme à la revendication 11, qui est constituée de polyéthylène, dont la masse volumique vaut au moins 16 kg/m³ et dans laquelle il y a au moins 70 % de cellules fermées

13. Feuille de mousse de polymère cellulaire extrudée, conforme à la revendication 11, qui est constituée de polypropylène, dont la masse volumique vaut au moins 16 kg/m³ et dans laquelle il y a au moins 70 % de cellules fermées

14. Feuille de mousse de polymère cellulaire extrudée, conforme à l'une des revendications 1 à 13, qui contient, dispersés dans la matrice polymère, un ou plusieurs des composés suivants : deltaméthrine, perméthrine, cyperméthrine, bifenthrine, cyfluthrine, cyhalothrine, téfluthrine, resméthrine, alléthrine, kadéthrine, fenvalérate, esfenvalérate, λ-cyhalothrine, tralométhrine, fenpropathrine, tétraméthrine, sanmarton, et leurs mélanges.

15. Feuille de mousse de polymère cellulaire extrudée, conforme à la revendication 14, qui contient un ou plusieurs des deltaméthrine, perméthrine, bifenthrine, et leurs mélanges.

16. Feuille de mousse de polymère cellulaire extrudée, conforme à l'une des revendications 1 à 15, dont la mousse présente un indice R, mesuré selon la norme ASTM C-518, de 1,2 à 2,4 par cm (3,0 à 6,0 par pouce).

17. Procédé de fabrication d'une feuille de mousse, qui comporte le fait d'extruder une composition moussante de polymère dans laquelle est dispersé au moins un composé pyréthroïde, les composés pyréthroïdes présents dans la feuille se trouvant, par rapport au poids des matériaux solides constituant la mousse, en une quantité totale de 1 à 20 000 ppm (parties par million), dans des conditions permettant de former une feuille de mousse qui soit épaisse d'au moins 0,3 cm et où la taille moyenne des cellules vaille au moins 0,1 mm.

18. Procédé conforme à la revendication 17, dans lequel le compo-sé pyréthroïde est de la deltaméthrine, de la perméthrine, de la bifenthrine, ou un mélange de ces composés.

19. Procédé conforme à la revendication 17 ou 18, dans lequel le composé pyréthroïde est exposé à une température d'au moins 210 °C et à une pression d'au moins 6,21.10³ kPa (900 psi) au cours de ladite extrusion de la feuille de mousse.

20. Procédé conforme à la revendication 19, dans lequel le compo-sé pyréthroïde est exposé à une température d'au moins 240 °C au cours de ladite extrusion de la feuille de mousse.

21. Procédé conforme à la revendication 19, dans lequel le compo-sé pyréthroïde est exposé à une pression d'au moins 1,31.10⁴ kPa (1900 psi) au cours de ladite extrusion de la feuille de mousse.

22. Composition de composite, comprenant :
A) un panneau comprenant une feuille de mousse de polymère cellulaire extrudée, conforme à l'une des revendications 1 à 16, présentant deux surfaces primaires ou plus,
B) et au moins un parement collé à une surface primaire du panneau, lequel parement comprend un mélange de polymères contenant de 98 à 30 % en poids d'un polymère poly(alcényl-aromatique) et de 2 à 70 % en poids d'un interpolymère formé à partir d'éthylène, d'un ou de plusieurs monomères alcényl-aromatiques ou vinylidéniques aliphatiques ou cycloaliphatiques encombrés, et en option, d'un ou de plusieurs monomères oléfiniques polymérisables comportant de 3 à 20 atomes de carbone.
